# EUROPÄISCHE PATENTSCHRIFT

(11) **EP 3 698 051 B1**
(45) Veröffentlichungstag und Bekanntmachung des Hinweises auf die Patenterteilung: **08.12.2021**
(21) Anmeldenummer: 18807205.2
(22) Anmeldetag: 05.10.2018
(51) Int. Cl.: F15B 11/048, F15B 11/15, A01F 25/20, F15B 15/22, F15B 15/14, F15B 15/20

(54) **WECHSELSCHALTENDE HYDRAULIKEINHEIT**
SWITCHING HYDRAULIC UNIT
UNITÉ HYDRAULIQUE À COMMUTATION

(30) Priorität: 20.10.2017 DE 202017005490 U
(43) Veröffentlichungstag der Anmeldung: 26.08.2020
(73) Patentinhaber: Bümach Engineering International B.V., 7826 TA Emmen (NL)
(72) Erfinder: BUETER, Josef, 49733 Haren/Altenberge (DE)
(74) Vertreter: Weihrauch, Frank
(86) Internationale Anmeldenummer: PCT/DE2018/000283
(87) Internationale Veröffentlichungsnummer: WO 2019/076391

(56) Entgegenhaltungen:
- DE-A1- 19 952 881
- FR-A- 992 359
- US-A- 2 917 029

## Beschreibung

Die Erfindung betrifft eine wechselschaltende Hydraulikeinheit zur hydraulischen Steuerung von technischen Maschinen und Geräten, die insbesondere in der Agrartechnik einsetzbar sind.

Eine gattungsgemäße wechselschaltende Hydraulikeinheit stellt eine sich permanent wiederholende Umschaltung eines doppeltwirkenden Arbeitszylinders bereit, so dass die Kolbeneinheit des Arbeitszylinders automatisch solange ein- und ausfährt, wie ein Druckstrom beaufschlagt wird.

Anwendbar ist eine solche wechselschaltende Hydraulikeinheit unter anderem zur Betätigung eines Schneidmessers eines Siloblockschneiders. Siloblockschneider sind in verschiedenen Ausführungsformen aus dem Stand der Technik bekannt und dienen zum Schneiden von Futterblöcken aus dem als Silage bezeichneten Gärfutter sowie zum Transport der zugeschnittenen Blöcke in einen Stall oder eine sonstige Fütterungstelle.

Die Druckschrift DE 36 24 847 A1 beschreibt diesbezüglich eine hydraulische Steuereinrichtung für ein Silo-Entnahmegerät.

Diese weist einen von einem Hydromotor angetriebenen Schneider sowie einen Vorschubantrieb auf. Der Vorschubantrieb ist mittels eines zweiten Servomotors, welcher als doppeltwirkender Hydromotor oder Zylinder ausgebildet ist, betätigt. Die beiden Hydromotoren sind von einer gemeinsamen Druckmittelquelle über ein 3-Wege-Stromregelventil und mindestens ein Wegeventil mit Druckmittel versorgbar, wobei dessen Konstantstrom dem Servomotor des Vorschubantriebs und dessen Reststrom dem Hydromotor des Schneiders zugeleitet wird.

Kennzeichen der vorliegend offenbarten Steuereinrichtung ist es, dass das Stromregelventil zwischen der Druckmittelquelle und dem Wegeventil angeordnet ist und dass der Reststrom mittels eines zweiten Wegeventils wahlweise dem Konstantstrom oder dem Hydromotor des Schneiders zuschaltbar ist.

Eine weitere hydraulische Steuereinrichtung, welche insbesondere für einen Siloblockschneider anwendbar ist, ist aus der Druckschrift DE 39 29 651 A1 bekannt. Hierbei ist zwischen den Arbeitsräumen der mechanisch-hydraulischen Umformer jeweils ein druckgesteuertes Drosselventil geschaltet.

Zudem ist aus der Druckschrift DE 33 14 459 C2 ein Siloblockschneider zum höhenverstellbaren Anschluss an eine Schlepper-Hebevorrichtung bekannt. Dieser weist eine horizontale Führungsbahn auf, entlang welcher eine Schneidvorrichtung mittels einer Vorschubeinrichtung schrittweise verfahrbar ist. An der Schneidvorrichtung ist ein Messer mittels einer Hubeinrichtung heb- und senkbar gelagert, wobei die Abwärtsbewegung einem Arbeitshub und die Aufwärtsbewegung einem Rückhub entspricht. Darüberhinaus ist ein Steuergerät vorgesehen, dass nach jedem Rückhub des Messers einen Vorschubschritt der Schneidvorrichtung auslöst und beendet. Der Vorschub der Schneidvorrichtung und der Hub des Messers werden dabei in gegenseitiger Abhängigkeit mittels des Steuergeräts derart gesteuert, dass jeweils bei Beendigung eines Vorschubschrittes der Arbeitshub automatisch ausgelöst wird und die Vorschubeinrichtung und die Hubeinrichtung abwechselnd stillgesetzt sind.

Aus US 2 917 029 A ist eine Lösung bekannt, bei der nachteilig der Druck für eine Wechselschaltung durch eine Pumpe bereitgestellt werden muss.

Die Aufgabe der Erfindung ist es, eine wechselschaltende Hydraulikeinheit anzugeben, welche eine hohe Betriebssicherheit gewährleistet, einen geringen Wartungsaufwand erfordert, eine hohe Laufruhe ermöglicht und zudem kostengünstig herstellbar ist.

Die Aufgabe wird durch die im Patentanspruch 1 aufgeführten Merkmale gelöst.

Eine erfindungsgemäße wechselschaltende Hydraulikeinheit weist als Grundbestandteile einen Arbeitszylinder sowie eine hydraulische Steuerungseinheit auf.

Der Arbeitszylinder ist erfindungsgemäß als doppeltwirkender Zylinder ausgestaltet, so dass dieser aktiv ein- und aktiv ausfahrbar ist. Der Arbeitszylinder weist einen Kolben, eine Kolbenstange sowie ein Zylinderrohr auf und ist durch den Kolben in einen ersten und zweiten Arbeitsraum unterteilt.

Vorliegend weist der Kolben eine radial umlaufende Dichtung, einen ersten Kolbenring mit einem ersten Kolbenringspalt und einen zweiten Kolbenring mit einem zweiten Kolbenringspalt auf. Die beiden Kolbenringe sind jeweils von der Dichtung axial beabstandet angeordnet.

Des Weiteren weist der Arbeitszylinder in einem ersten axialen Endlagendämpfungsbereich einen ersten Hauptanschluss sowie einen ersten Steueranschluss und in einem zweiten axialen Endlagendämpfungsbereich einen zweiten Hauptanschluss sowie einen zweiten Steueranschluss auf. Als Endlagendämpfungsbereiche werden vorliegend die sich axial gegenüberliegenden Endbereiche des Arbeitszylinders bezeichnet.

Die beiden Hauptanschlüsse sind gegenüber den beiden Steueranschlüssen jeweils in Richtung des Kolbens axial versetzt angeordnet, so dass die Hauptanschlüsse in den beiden Endbereichen jeweils die innenliegenden Anschlüsse und die Steueranschlüsse die außenliegenden Anschlüsse bilden. Über die Hauptanschlüsse ist ein Fluid als hydraulisches Arbeitsmedium in die beiden Arbeitsräume einleitbar, wobei der erste Hauptanschluss dem ersten Arbeitsraum und der zweite Hauptanschluss dem zweiten Arbeitsraum zugeordnet ist.

Bei einem Überfahren des ersten Hauptanschlusses durch den ersten Kolbenring wird der freie Abstrom des Fluids aus dem ersten Arbeitsraum in den ersten Hauptanschluss versperrt, so dass ein Teilvolumen des Fluids innerhalb des ersten Arbeitsraums eingeschlossen wird. Das eingeschlossene Teilvolumen ist dann ausschließlich über den Kolbenringspalt gedrosselt in den Bereich zwischen erstem Kolbenring und radial umlaufender Dichtung und von dort in den ersten Hauptanschluss abströmbar. Auf diese Weise wird eine Endlagendämpfung in dem ersten Endbereich bereitgestellt.

In entsprechender Weise wird bei einem Überfahren des zweiten Hauptanschlusses durch den zweiten Kolbenring ein Teilvolumen des Fluids in dem zweiten Arbeitsraum eingeschlossen. Das eingeschlossene Teilvolumen ist dann über den zweiten Kolbenringspalt gedrosselt abströmbar. Damit wird eine Endlagendämpfung auch in dem zweiten Endbereich bereitgestellt.

Die pro Zeiteinheit gedrosselt abströmende Fluidmenge und damit das Dämpfungsmaß kann über die Breite des jeweiligen Kolbenringspalts eingestellt werden.

Vorzugsweise weist das Zylinderrohr in dem Bereich nach dem jeweiligen Hauptanschluss eine Konizität auf, so dass der jeweilige Kolbenring mit fortgesetzter Bewegung des Kolbens in Richtung Endlage fortschreitend zusammengedrückt wird und sich die Breite des betreffenen Kolbenringspalts zunehmend verringert. Damit wird eine progressive Endlagendämpfung erreicht.

Die hydraulische Steuerungseinheit, welche das Ein- und Ausleiten der Fluidströme in die beiden Arbeitsräume steuert, weist ein erstes und zweites hydraulisch betätigtes Steuerventil sowie ein hydraulisch betätigtes Umschaltventil auf. Weitere Be-standteile der hydraulischen Steuerungseinheit sind eine Druckstromzuleitung, eine Fluidrückleitung, eine erste und zweite Hauptleitung sowie eine erste und zweite Steuerleitung.

Das erste und zweite Steuerventil können jeweils eine passive und eine aktive Schaltstellung annehmen und weisen je ein Federelement auf, welches in der passiven Schaltstellung entspannt ist und in der aktiven Schaltstellung gespannt ist. Zudem weist jedes der Steuerventile einen Betätigungsanschluss und einen Gegenbetätigungsanschluss auf, wobei bei einer gleichen Druckbeaufschlagung an dem Betätigungs- und Gegenbetätigungsanschluss die passive Schaltstellung eingenommen wird und bei einer Druckbeaufschlagung mit einem höheren Druck an dem Betätigungsanschluss die aktive Schaltstellung eingenommen wird.

Betätigungs- und Gegenbetätigungsanschluss wirken wie nachfolgend beschrieben zusammen: Die Steuerventile weisen in an sich bekannter Weise einen axial beweglichen Steuerschieber auf, dessen axiale Lage die passive und die aktive Schaltstellung bestimmt. Der Steuerschieber weist gegenüberliegende Stirnflächen auf, die wie Kolbenflächen wirken und auf der einen Seite durch den Betätigungsanschluss und auf der anderen Seite durch den Gegenbetätigungsanschluss mit einem Fluiddruck beaufschlagt werden. Wird beispielsweise die gegenbetätigungsseitige Stirnfläche etwas größer gewählt als die betätigungsseitige Stirnfläche, wird bei gleichem Druck das jeweilige Steuerventil zuverlässig in der passiven Schaltfläche gehalten. Ferner wirkt das Federelement auf den Steuerschieber und beauf-schlagt eine Kraft in Richtung der passiven Schaltstellung.

Die zum Bewirken der aktiven oder passiven Schaltstellung konkret erforderliche höhere Druckbeaufschlagung an dem Betätigungsanschluss ist durch die Eigenschaften des Federelements sowie durch eine Variation des Größenverhältnisses der hydraulisch wirksamen Stirnflächen des Steuerschiebers des Steuerventils an dem Betätigungs- und Gegenbetätigungsanschluss einstellbar.

Das Umschaltventil kann ebenfalls zwei Schaltstellungen annehmen, welche vorliegend als erste und zweite Schaltstellung bezeichnet werden. Das Umschaltventil weist in an sich bekannter Weise eine Steuerschieber auf. Das Umschaltventil weist einen ersten und zweiten Betätigungsanschluss sowie insgesamt sechs Arbeitsanschlüsse auf. Bei einer Druckbeaufschlagung am ersten Betätigungsanschluss wird die erste Schaltstellung und bei einer Druckbeaufschlagung am zweiten Betätigungsanschluss die zweite Schaltstellung angenommen.

Die Druckstromzuleitung der erfindunsgemäßen Hydraulikeinheit ist mit einem ersten Arbeitsanschluss des Umschaltventils verbunden und an eine Druckstrom-quelle anschließbar.

Die Fluidrückleitung ist mit einem zweiten Arbeitsanschluss des Umschaltventils verbunden und mündet vorzugsweise in einen Tank, in dem das Fluid aufgenommen wird. Die Druckstromquelle sowie der Tank sind nicht Bestandteil der erfindungsgemäßen Hydraulikeinheit.

Die erste Hauptleitung verbindet den ersten Hauptanschluss des Arbeitszylinders mit einem dritten und sechsten Arbeitsanschluss des Umschaltventils sowie mit dem Gegenbetätigungsanschluss des ersten Steuerventils, so dass dieser mit dem in der ersten Hauptleitung vorhandenen Druck beaufschlagbar ist.

Die zweite Hauptleitung verbindet den zweiten Hauptanschluss des Arbeitszylinders mit einem vierten und fünften Arbeitsanschluss des Umschaltventils und dem Gegenbetätigungsanschluss des zweiten Steuerventils. Somit ist der Gegenbetätigungsanschluss des zweiten Steuerventils mit dem an der zweiten Hauptleitung anliegenden Druck beaufschlagbar.

Die erste Steuerleitung stellt eine schaltbare Verbindung zwischen dem ersten Steueranschluss des Arbeitszylinders und dem ersten Betätigungsanschluss des Umschaltventils bereit. Hierzu ist mittels der ersten Steuerleitung der erste Steueranschluss des Arbeitszylinders mit dem Betätigungsanschluss des ersten Steuerventils sowie zugleich über die Arbeitsanschlüsse des ersten Steuerventils mit dem ersten Betätigungsanschluss des Umschaltventils verbunden. Der Abschnitt der ersten Steuerleitung zwischen dem ersten Steuerventil und dem ersten Betätigungsanschluss des Umschaltventils ist bei der aktiven Schaltstellung des ersten Steuerventils geöffnet und bei der passiven Schaltstellung geschlossen. Durch die Verbindung mit dem Betätigungsanschluss des ersten Steuerventils wird mittels der Steuerleitung zudem auch die Schaltung des ersten Steuerventils bewirkt.

Dies gilt in entsprechender Weise für die zweite Steuerleitung. Diese stellt eine schaltbare Verbindung zwischen dem zweiten Steueranschluss des Arbeitszylinders und dem zweiten Betätigungsanschluss des Umschaltventils bereit. Hierzu ist mittels der zweiten Steuerleitung der zweite Steueranschluss des Arbeitszylinders mit dem Betätigungsanschluss des zweiten Steuerventils sowie zugleich über die Arbeitsanschlüsse des zweiten Steuerventils mit dem zweiten Betätigungsanschluss des Umschaltventils verbunden. Der Abschnitt der zweiten Steuerleitung zwischen dem zweiten Steuerventil und dem zweiten Betätigungsanschluss des Umschaltventils ist bei der aktiven Schaltstellung des zweiten Steuerventils geöffnet und bei der passiven Schaltstellung geschlossen. Durch die Verbindung mit dem Betätigungsanschluss des zweiten Steuerventils wird mittels der Steuerleitung zudem auch die Schaltung des zweiten Steuerventils bewirkt.

Das Zusammenwirken der Komponenten und die Funktionsweise der Hydraulikeinheit wird nachfolgend beschrieben:

Befindet sich beispielsweise das Umschaltventil zu Beginn in einer ersten Schaltstellung, dann ist die Druckstromleitung mit der ersten Hauptleitung verbunden. Damit strömt über den ersten Hauptanschluss das Fluid in den ersten Arbeitsraum ein und bewegt den Kolben in Richtung des zweiten Endlagendämpfungsbereichs. Hierbei wird Fluid aus dem zweiten Arbeitsraum über den zweiten Hauptanschluss und die zweite Hauptleitung verdrängt und von dem Umschaltventil in seiner zweiten Schaltstellung in die Fluidrückleitung geführt. Dabei liegt an dem zweiten Hauptanschluss und an dem zweiten Steueranschluss der gleiche Druck an, womit auch an dem Betätigungsanschluss und dem Gegenbetätigungsanschluss des zweiten Steuerventils ein gleicher Druck anliegt. Damit wird das zweite Steuerventil in der passiven Schaltstellung gehalten.

Bei einem Überfahren des zweiten Hauptanschlusses von dem zweiten Kolbenring wird ein Teilvolumen des Fluids in dem zweiten Arbeitsraum eingeschlossen und dessen Abstrom über den zweiten Hauptanschluss gedrosselt. Dies bewirkt zum ersten eine Endlagendämpfung und zum zweiten einen Überdruck an dem zweiten Steueranschluss im Vergleich zu dem Druck am zweiten Hauptanschluss. Der vorhandene Überdruck wird mittels der zweiten Steuerleitung an das zweite Steuerventil übertragen. Das zweite Steuerventil wird infolge der erhöhten Druckbeaufschlagung an dessen Betätigungsanschluss in die aktive Schaltstellung versetzt. Dabei wird das im zweiten Steuerventil vorhandene Federelement gespannt, welches zuvor in einem entspannten Zustand die passive Schaltstellung des Steuerventils bewirkte.

Über das in der aktiven Schaltstellung befindliche zweite Steuerventil ist nun die zweite Steuerleitung bis hin zu dem zweiten Betätigungsanschluss des Umschaltventils geöffnet. Der zweite Betätigungsanschluss ist daher mit einem Druck beaufschlagt, so dass von dem Umschaltventil eine zweite Schaltstellung eingenommen wird.

Mit dem Wechsel von der ersten in die zweite Schaltstellung des Umschaltventils ist die Umschaltung bewirkt. Damit wird die Bewegung des Kolbens in Richtung des zweiten Endlagendämpfungsbereichs beendet und eine Bewegungsumkehr des Kolbens eingeleitet.

Nun befindet sich das Umschaltventil in seiner zweiten Schaltstellung. In der zweiten Schaltstellung ist die Druckstromleitung mit der zweiten Hauptleitung verbunden. Damit strömt über den zweiten Hauptanschluss das Fluid in den zweiten Arbeitsraum ein und bewegt den Kolben in Richtung des ersten Endlagendämpfungsbereichs. Hierbei wird Fluid aus dem ersten Arbeitsraum verdrängt und über den ersten Hauptanschluss und die erste Hauptleitung sowie über das Umschaltventil in die Fluidrückleitung geführt.

Dabei liegt an dem ersten Hauptanschluss und an dem ersten Steueranschluss der gleiche Druck an, womit auch an dem Betätigungsanschluss und dem Gegenbetätigungsanschluss des ersten Steuerventils ein gleicher Druck anliegt. Damit wird das erste Steuerventil in der passiven Schaltstellung gehalten.

Bei einem Überfahren des ersten Hauptanschlusses von dem ersten Kolbenring wird ein Teilvolumen des Fluids in dem ersten Arbeitsraum eingeschlossen und dessen Abstrom über den ersten Hauptanschluss gedrosselt. Dies bewirkt zum ersten eine Endlagendämpfung und zum zweiten einen Überdruck an dem ersten Steueranschluss im Vergleich zu dem Druck am ersten Hauptanschluss. Der vorhandene Überdruck ist mittels der ersten Steuerleitung an das erste Steuerventil übertragbar. Das erste Steuerventil wird infolge der erhöhten Druckbeaufschlagung an dessen Betätigungsanschluss in die aktive Schaltstellung versetzt. Dabei wird das im ersten Steuerventil vorhandene Federelement gespannt, welches zuvor in einem entspannten Zustand die passive Schaltstellung des Steuerventils bewirkte.

Über das in der aktiven Schaltstellung befindliche erste Steuerventil ist nun die erste Steuerleitung bis hin zum dem ersten Betätigungsanschluss des Umschaltventils geöffnet. Der erste Betätigungsanschluss ist druckbeaufschlagt, so dass von dem Umschaltventil eine erste Schaltstellung eingenommen wird.

Mit dem Wechsel von der zweiten in die erste Schaltstellung des Umschaltventils ist die Rückumschaltung bewirkt.

Somit wird die Bewegung des Kolbens in Richtung des ersten Endlagendämpfungsbereichs beendet und erneut eine Bewegungsumkehr des Kolbens eingeleitet.

Erfindungsgemäß wiederholt sich die Abfolge aus Bewegung und Bewegungsumkehr des Kolbens automatisch, solange ein Druckstrom beaufschlagt wird. Dementsprechend wird eine sich permanet wiederholende Umschaltung des Arbeitszylinders bereitgestellt.

Vorliegend sind somit vier verschiedene Betriebszustände von der hydraulischen Steuerungseinheit einnehmbar. Während der Bewegung des Kolbens in Richtung des ersten Endlagendämpfungsbereiches und vor dem Überfahren des ersten Hauptanschlusses befindet sich die hydraulische Steuerungseinheit in einem ersten Betriebszustand. Dieser ist dadurch gekennzeichnet, dass sich sowohl das erste als auch das zweite Steuerventil in der passiven Schaltstellung befinden. Das Um-schaltventil befindet sich in der zweiten Schaltstellung. Folglich wird Fluid in den zweiten Arbeitsraum eingeleitet und aus dem ersten Arbeitsraum ausgeleitet.

Nach dem Überfahren des ersten Hauptanschlusses von dem ersten Kolbenring nimmt die hydraulische Steuerungseinheit einen zweiten Betriebszustand an. In diesem wechselt die Schaltstellung des ersten Steuerventils auf aktiv, während das zweite Steuerventil in der passiven Schaltstellung verbleibt. Das nun aktive erste Steuerventil bedingt einen Wechsel des Umschaltventils in dessen erste Schaltstellung.

Es wird nun Fluid in den ersten Arbeitsraum eingeleitet und eine Bewegung des Kolbens in Richtung des zweiten Endlagendämpfungsbereichs bewirkt. Während dieser Bewegung des Kolbens in Richtung des zweiten Endlagendämpfungsbereichs und vor dem Überfahren des zweiten Hauptanschlusses nimmt die hydraulische Steuerungseinheit einen dritten Betriebszustand an. Dabei befinden sich das erste und zweite Steuerventil in der passiven Schaltstellung und das Umschaltventil befindet sich in der ersten Schaltstellung. Somit wird Fluid in den ersten Arbeitsraum eingeleitet und aus dem zweiten Arbeitsraum ausgeleitet.

Nach dem Überfahren des zweiten Hauptanschlusses von dem zweiten Kolbenring nimmt die hydraulische Steuerungseinheit einen vierten Betriebszustand an. In diesem ist der Wechsel der Schaltstellung des zweiten Steuerventils auf aktiv erfolgt, während das erste Steuerventil in der passiven Schaltstellung verbleibt. Daher wechselt das Umschaltventil von der ersten in die zweite Schaltstellung.

Es wird nun Fluid in den zweiten Arbeitsraum eingeleitet und aus dem ersten Arbeitsraum ausgeleitet.

Anschließend geht die hydraulische Steuerungseinheit erneut in den ersten Betriebszustand über, so dass sich die beschriebene Betriebszustandsabfolge wiederholt.

Der zweite und der vierte Betriebszustand werden jeweils nur für die kurze Phase nach dem Überfahren der Hauptanschlüsse durch den jeweiligen Kolbenring eingenommen, da die jeweiligen Steuerventile nach Erreichen der Endlage des Kolbens und der damit erfolgenden Beendigung der Druckdifferenz zwischen jeweiligem Hauptanschluss und Steueranschluss wieder in die passive Schaltstellung zurückfallen.

Die Bereitstellung eines Fluiddruckstroms und dessen Zu- oder Abschaltung erfolgt durch Einrichtungen außerhalb der erfindungsgemäßen Hydraulikeinheit, beispielsweise durch die Hydraulikanlage eines Traktors oder durch eine stationäre Hydraulikpumpenanlage.

Als von dem Schutzumfang umfasst wird es auch angesehen, wenn beispielsweise durch eine innere hydraulische Verschaltung das Umschaltventil nur vier Arbeitsanschlüsse aufweist, von denen jeweils zwei in einer passiven Schaltstellung direkt verbunden und in einer aktiven Schaltstellung über Kreuz verbunden sind. Es ist lediglich entscheidend, dass in einer passiven Schaltstellung die Druckstromzuleitung mit der ersten Hauptleitung sowie die zweite Hauptleitung mit der Fluidrückleitung, sowie in einer aktiven Schaltstellung die Druckstromzuleitung mit der zweiten Hauptleitung sowie die erste Hauptleitung mit der Fluidrückleitung verbunden ist.

Die erfindungsgemäße wechselschaltende Hydraulikeinheit zeichnet sich insbesondere durch die nachfolgenden Vorteile aus.

Ein Vorteil besteht darin, dass mittels der erfindungsgemäßen Hydraulikeinheit die Steuerung der Bewegungen des Arbeitszylinders selbsttätig erfolgt und ohne zusätzliche aktive Mittel wie zusätzliche hydraulisch bereitgestellte Steuerbefehle, elektronische Steuerungseinheiten oder Positionserfassungsmittel ermöglicht wird. Es wird lediglich der für die Betätigung der Bewegung des Arbeitszylinders ohnehin benötigte Fluiddruckstrom verwandt.

Damit in Verbindung steht der Vorteil, dass keine gesonderte Energiequelle für die Betätigung der Umsteuerung erforderlich ist.

Als weiterer Vorteil wird erfindungsgemäß zugleich eine Endlagendämpfung in beiden axialen Endbereichen und somit bei jeder Bewegungsumkehr erzielt, welche für einen gleichmäßigen Bewegungsablauf der Kolbeneinheit wichtig ist. Somit können unerwünschte dynamische Belastungen sowohl der Hydraulikeinheit als auch einer von ihr betriebenen Vorrichtung wie beispielsweise einem Siloblockschneider insgesamt verhindert werden.

Vorteilhaft ist die besondere Betriebssicherheit. Die zuverlässige Umschaltung ist insbesondere darauf zurückzuführen, dass neben den Hauptanschlüssen jeweils ein Steueranschluss vorhanden ist, so dass aufgrund von verschiedenen Druckverhältnissen in den Steuer- und Hauptleitungen zuverlässig eine Änderung der Schaltstellung der Steuerventile und nachfolgend des Umschaltventils bewirkbar ist.

Ein besonderer Vorteil ist es, dass der Druck zum Steuern der Ventile aus dem Fluidabstrom verwandt wird. Damit liegen wesentlich geringere Drücke vor als diese beispielsweise in der Druckstromzuleitung anliegen, so dass alle Schaltvorgänge weicher, also mit geringerer Stoßbelastung für alle einbezogenen Bauelemente, insbesondere für die Ventile und die Hydraulikleitungen ablaufen. Es treten geringere dynamische Belastungen auf.

Es ist ferner ein Vorteil, dass die Hydraulikeinheit selbsttätig die Bewegung des Kolbens nach dem Durchlaufen einer Ausfahrt, Umkehr und Einfahrt in der Ausgangslage wieder erneut beginnt, solange die Druckstromleitung mit einem Fluiddruckstrom beaufschlagt bleibt. Vorteilhaft ist es zudem, dass die Bewegung des Kolbens mit Beginn einer Beaufschlagung mit einem Fluiddruckstrom selbsttätig anläuft und dann selbsttätig bis zur Beendigung der Fluidstrombeaufschlagung fortsetzt.

Ein weiterer Vorteil ist es, dass die für die Änderung der Schaltstellung des ersten oder zweiten Steuerventils erforderliche Druckbeaufschlagung durch die Auswahl des jeweiligen Federlements festlegbar ist. Dabei können verschiedene Parameter wie die Federkonstante, Form und Größe für die Wahl eines Federlements herangezogen werden.

Neben dem vorhandenen Federelement ist zudem das Flächenverhältnis der Stirnflächen des Betätigungs- und Gegenbetätigungsanschlusses des jeweiligen Steuerventils hinsichtlich der für einen Wechsel der Schaltstellung erforderlichen Druckverhältnisse entscheidend.

Die Steuerventile sind somit auf verschiedene Arten an die Einsatzerfordernisse anpassbar.

Des Weiteren ist es von Vorteil, dass der Einfluss der temperaturabhängigen Viskosität des Fluids in den Endlagendämpfungsbereichen vorliegend reduziert werden kann.

Die Erfindung wird als Ausführungsbeispiel anhand von
Fig. 1 Hydraulikschaltplan der erfindungsgemäßen wechselschaltenden Hydraulikeinheit in einem ersten Schaltzustand,
Fig. 2 Hydraulikschaltplan der erfindungsgemäßen wechselschaltenden Hydraulikeinheit in einem zweiten Schaltzustand,
Fig. 3 Hydraulikschaltplan der erfindungsgemäßen wechselschaltenden Hydraulikeinheit in einem dritten Schaltzustand,
Fig. 4 Hydraulikschaltplan der erfindungsgemäßen wechselschaltenden Hydraulikeinheit in einem vierten Schaltzustand
näher erläutert.

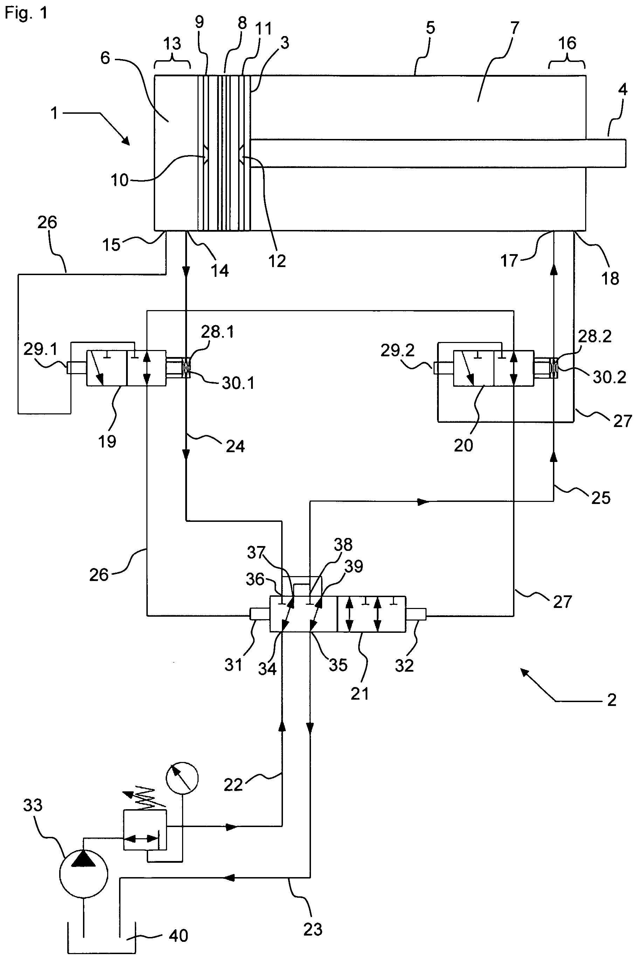

Das in den Fig. 1 bis 4 dargestellte Ausführungsbeispiel der Hydraulikeinheit umfasst einen Arbeitszylinder 1 sowie eine hydraulische Steuerungseinheit 2.

Der Arbeitszylinder 1 weist einen Kolben 2, eine Kolbenstange 3 sowie ein Zylinderrohr 4 auf und ist in einen ersten und einen zweiten Arbeitsraum 6 und 7 unterteilt. Vorliegend ist der Arbeitszlinder 1 als doppeltwirkender Arbeitszylinder ausgebildet, so dass der Kolben 3 von beiden Seiten mit einem hydraulischen Fluid beaufschlagbar ist und der Arbeitszylinder 1 somit aktiv ein- und ausfahrbar ist.

Der Kolben 3 weist eine radial umlaufende Dichtung 8 sowie einen ersten und einen zweiten Kolbenring 9 und 11 auf, die jeweils von der Dichtung 8 axial beabstandet sind. Die beiden Kolbenringe 9, 11 weisen vorliegend jeweils einen Kolbenringspalt 10, 12 auf.

Erfindungsgemäß weist der Arbeitszylinder 1 in einem ersten axialen Endlagendämpfungsbereich 13 einen ersten Hauptanschluss 14 sowie einen ersten Steueranschluss 15 und in einem zweiten axialen Endlagendämpfungsbereich 16 einen zweiten Hauptanschluss 17 sowie einen zweiten Steueranschluss 18 auf. Die beiden Hauptanschlüsse 14, 17, über welche ein Fluid in die Arbeitsräume 6, 7 ein- und ausleitbar ist, sind jeweils gegenüber den Steueranschlüssen 15, 18 in Richtung des Kolbens 3 axial versetzt angeordnet. Bei dem verwendeten Fluid handelt es sich vorzugsweise um ein Hydrauliköl.

Bei der axialen Bewegung des Kolbens 3 sind die beiden Hauptanschlüsse 14, 17 von dem jeweiligen Kolbenring 9, 11 überfahrbar, so dass das in den jeweiligen Endlagendämpfungsbereichen 13, 16 eingeschlossene Fluid nur noch über den jeweiligen Kolbenringspalt 10, 12 abströmen kann wodurch eine Endlagendämpfung bewirkt wird.

Die hydraulische Steuerungseinheit 2 weist ein erstes und zweites hydraulisch betätigtes Steuerventil 19, 20 und ein hydraulisch betätigtes Umschaltventil 21 auf. Weiterhin umfasst die hydraulische Steuerungseinheit eine Druckstromzuleitung 22, eine Fluidrückleitung 23, eine erste und zweite Hauptleitung 24, 25 sowie eine erste und zweite Steuerleitung 26, 27.

Das erste und zweite Steuerventil 19, 20 können eine aktive oder eine passive Schaltstellung einnehmen und weisen je ein Federelement 28 auf. Dieses ist in der passiven Schaltstellung entspannt und in der aktiven Schaltstellung gespannt. Die beiden Steuerventile 19, 20 weisen je einen Betätigungsanschluss 29 und einen Gegenbetätigungsanschluss 30 auf. Die Stirnflächen des jeweiligen Steuerschiebers auf der Seite des Betätigungsanschlusses 29 und des Gegenbetätigungsanschlusses 30 sind so dimensioniert, dass bei einer gleichen Druckbeaufschlagung an dem Betätigungsanschluss 29 und dem Gegenbetätigungsanschluss 30 die Steuerventile 19, 20 die passive Schaltstellung einnehmen, während bei einer Druckbeaufschlagung mit einem höheren Druck an dem Betätigungsanschluss 29 jeweils die aktive Schaltstellung eingenommen wird. Dabei zeigt Fig. 1 konkret das Federelement 28.1 des ersten Steuerventils und das Federelement 28.2 des zweiten Steuerventils, den Betätigungsanschluss 29.1 des ersten Steuerventils und den Betätigungsanschluss 29.2 des zweiten Steuerventils sowie den Gegenbetäti-gungsanschluss 30.1 des ersten Steuerventils und den Gegenbetätigungsanschluss 30.2 des zweiten Steuerventils.

Eine Einstellung der zur Annahme der aktiven oder passiven Schaltstellung benötigten Druckverhältnisse kann über die Auswahl des jeweiligen Federlements 28 sowie über das Größenverhältnis der Stirnflächen des Betätigungs- und Gegenbetätigungsanschlusses 29, 30 des jeweiligen Steuerventils 19, 20 erfolgen.

Das Umschaltventil 21 weist einen ersten und einen zweiten Betätigungsanschluss 31, 32 auf und kann vorliegend eine erste oder eine zweite Schaltstellung einnehmen. Bei einer Druckbeaufschlagung am ersten Betätigungsanschluss 31 wird die erste Schaltstellung und bei Druckbeaufschlagung am zweiten Betätigungsanschluss 32 die zweite Schaltstellung eingenommen.

Mittels der Druckstromzuleitung 22 ist ein erster Arbeitsanschluss 34 des Umschaltventils 21 mit einer Druckstromquelle 33 wie einer Hydraulikpumpe verbindbar. Die Fluidrückleitung ist mit einem zweiten Arbeitsanschluss 35 des Umschaltventils 21 verbunden und mündet vorzugsweise in einen Tank 40, aus welchem das rückgeleitete Fluid von der Druckstromquelle 33 erneut beziehbar ist. Die Druckstromquelle 33 und der Tank 40 sind nicht Bestandteil der Hydraulikeinheit.

Die erste Hauptleitung 24 verbindet den ersten Hauptanschluss 14 des Arbeitszylinders 1 mit einem dritten und einem sechsten Arbeitsanschluss 36, 39 des Umschaltventils 21 sowie mit dem Gegenbetätigungsanschluss 30 des ersten Steuerventils 19. Die zweite Hauptleitung 25 verbindet den zweiten Hauptanschluss 17 des Arbeitszylinders 1 mit einem vierten und einem fünften Arbeitsanschluss 37, 38 des Umschaltventils 21 und mit dem Gegenbetätigungsanschluss 30 des zweiten Steuerventils 20.

Die Verbindung des ersten Steueranschlusses 15 des Arbeitszylinders 1 mit dem Betätigungsanschluss 29 des ersten Steuerventils 19 sowie mit dem ersten Betätigungsanschluss 31 des Umschaltzylinders 21 wird vorliegend von der ersten Steuerleitung 26 bereitgestellt. Die zweite Steuerleitung 27 verbindet den zweiten Steueranschluss 18 des Arbeitszylinders 1 mit dem Betätigungsanschluss 29 des zweiten Steuerventils 20 sowie mit dem zweiten Betätigungsanschluss 32 des Um-schaltzylinders 21.

Überblicksartig lässt sich das Zusammenwirken so beschreiben, dass das Umschaltventil 21 also als Wegeventil 4/2 funktioniert und zwei Schaltstellungen aufweist. Je nach Schaltstellung des Umschaltventils 21sind entweder dessen Arbeitsanschlüsse 37 und 39 oder dessen Arbeitsanschlüsse 36 und 38 mit den beiden Hauptleitungen 24 und 25 verbunden, die ihrerseits über das jeweiligen Steuerventil 19, 20 mit den Hauptanschlüssen 14 und 17 verbunden sind. Je nach Schaltstellung des Umschaltventils funktionieren die Hauptleitungen 24 und 25 als Fluiddruckleitung oder als Fluidablaufleitung. Die Betätigungsanschlüsse 31 und 32 des Umschaltventils 21 werden je nach dem, welchen Druckzustand die Arbeitsräume 6, 7 in den Endlagendämpfungsbereichen 13, 16 aufweisen, über die Steuerventile 19 und 20 geschaltet, indem der Steuerschieber des jeweiligen Steuerventils 19, 20 das jeweilige Steuerventil 19, 20 öffnet oder schließt und bei geöffneten Steuerventil 19, 20 den Fluiddruck auf den jeweiligen Betätigungsanschluss 31, 32 leitet. Die Umschaltung erfolgt damit über die gedämpften Drücke in den Endlagendämp-fungsbereichen 13 und 16 der Arbeitsräume 6 und 7.

Im Einzelnen gilt dabei Folgendes:
Die wechselschaltende Hydraulikeinheit ist so ausgebildet, dass sie bei dem bestimmungsgemäßen Gebrauch vier vrschiedene Betriebszustände einnehmen kann. Diese sind in Fig 1 bis Fig 4 dargestellt und werden nachfolgend näher beschrieben.

Fig. 1 zeigt den ersten Betriebszustand. Der Kolben 3 befindet sich zwischen den Hauptanschlüssen 14, 17 und bewegt sich in Richtung des ersten Endlagendämpfungsbereichs 13. Da an den Betätigungs- und Gegenbetätigungsanschlüssen 29, 30 des ersten und zweiten Steuerventils 19, 20 eine identische Druckbeaufschlagung wirksam ist, wird von beiden Steuerventilen 19, 20 die passive Schaltstellung eingenommen. Das Umschaltventil 21 befindet sich in der zweiten Schaltstellung, so dass Fluid in den zweiten Arbeitsraum 7 eingeleitet und aus dem ersten Arbeitsraum 6 ausgeleitet wird. Die jeweilige Strömungsrichtung des Fluids wird mit Hilfe von Pfeilspitzen verdeutlicht.

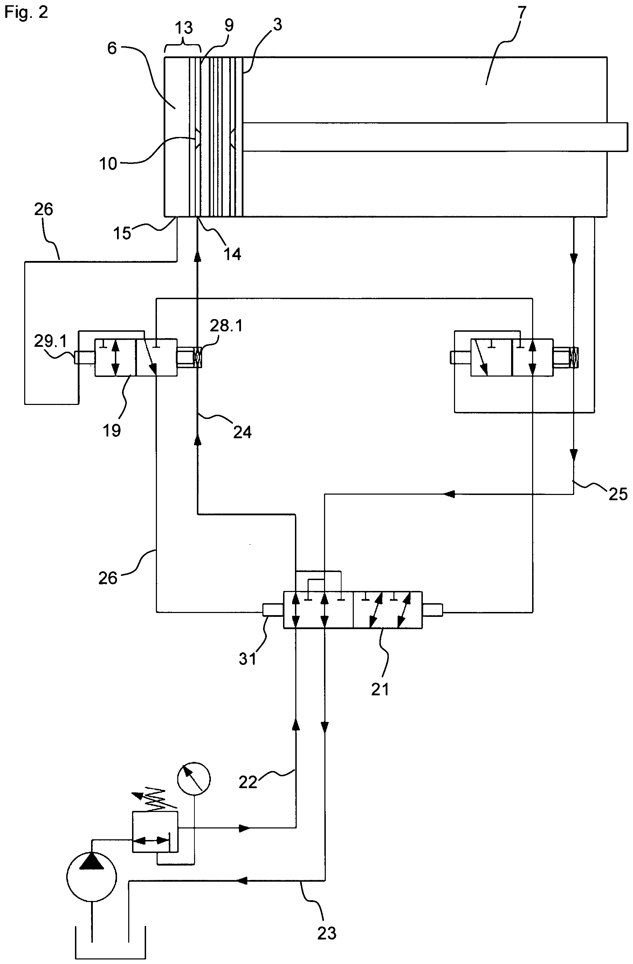

In Fig. 2 ist der zweite Betriebszustand dargestellt. Der Kolben 3 befindet sich in dem ersten Endlagendämpfungsbereich 13, wobei der erste Hauptanschluss 14 von dem ersten Kolbenring 9 überfahren wurde, so dass ein Teilvolumen des Fluids in dem ersten Arbeitsraum 6 eingeschlossen ist. Dieses ist über den ersten Kolbenringspalt 10 gedrosselt abströmbar. Aus der Verdichtung des eingeschlossenen Fluids resultiert ein Überdruck an dem ersten Steueranschluss 15, welcher mittels der ersten Steuerleitung 26 an das erste Steuerventil 19 übertragbar ist. Das erste Steuerventil 19 wird nun infolge der erhöhten Druckbeaufschlagung an dem Betätigungsanschluss 29 in die aktive Schaltstellung versetzt, wobei das Federelement 28 zusammengestaucht wird. In der aktiven Schaltstellung ermöglicht das erste Steuerventil 19 einen Fluiddurchtritt in Richtung des Umschaltventils 21, so dass der erste Betätigungsanschluss 31 des Umschaltventils 21 mit einem Druck beaufschlagt wird und dieses in die erste Schaltstellung übergeht. In der ersten Schaltstellung ist ein Druckstrom mittels der Druckstromzuleitung 22 über das Umschaltventil 21 und die erste Hauptleitung 24 in den ersten Arbeitsraum 6 leitbar. Zugleich wird ein Fluidabstrom aus dem zweiten Arbeitsraum 7 über die zweite Hauptleitung 25 und das Umschaltventil 21 in die Fluidrückleitung 23 eingeleitet. Somit wird eine gedämpfte Bewegungsumkehr der Kolbeneinheit bewirkt.

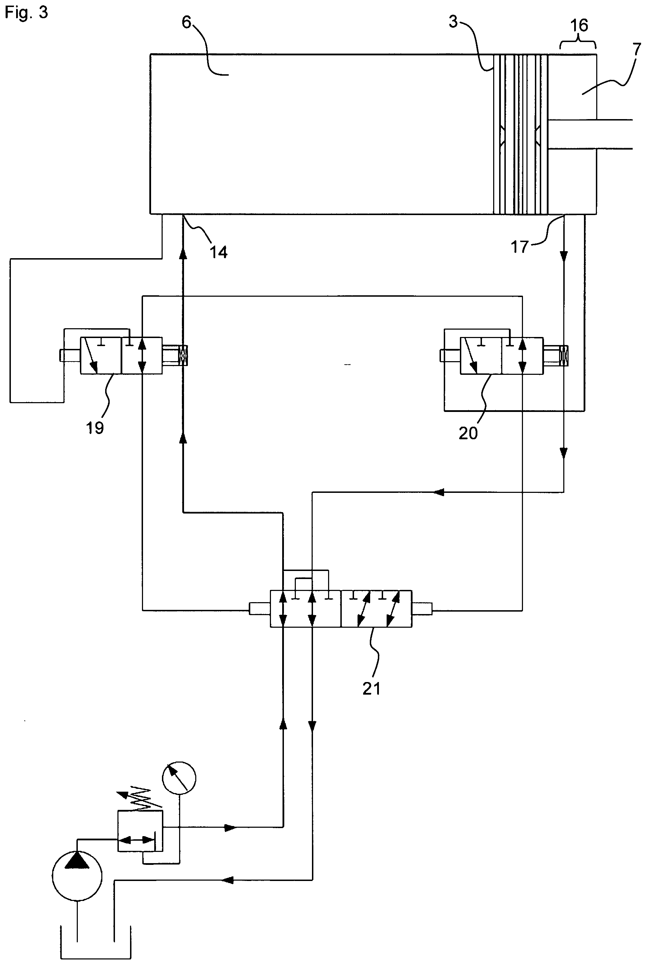

Fig. 3 stellt den dritten Betriebszustand dar. Hierbei befindet sich der Kolben 3 zwischen den Hauptanschlüssen 14, 17 und bewegt sich in Richtung des zweiten Endlagendämpfungsbereichs 16. Aufgrund der ausgeglichenen Druckverhältnisse an den Anschlüssen nimmt sowohl das erste als auch das zweite Steuerventil 19, 20 die passive Schaltstellung an. Das Umschaltventil 21 nimmt weiterhin die erste Schaltstellung an, so dass Fluid in den ersten Arbeitsraum 6 eingeleitet und aus dem zweiten Arbeitsraum 7 ausgeleitet wird.

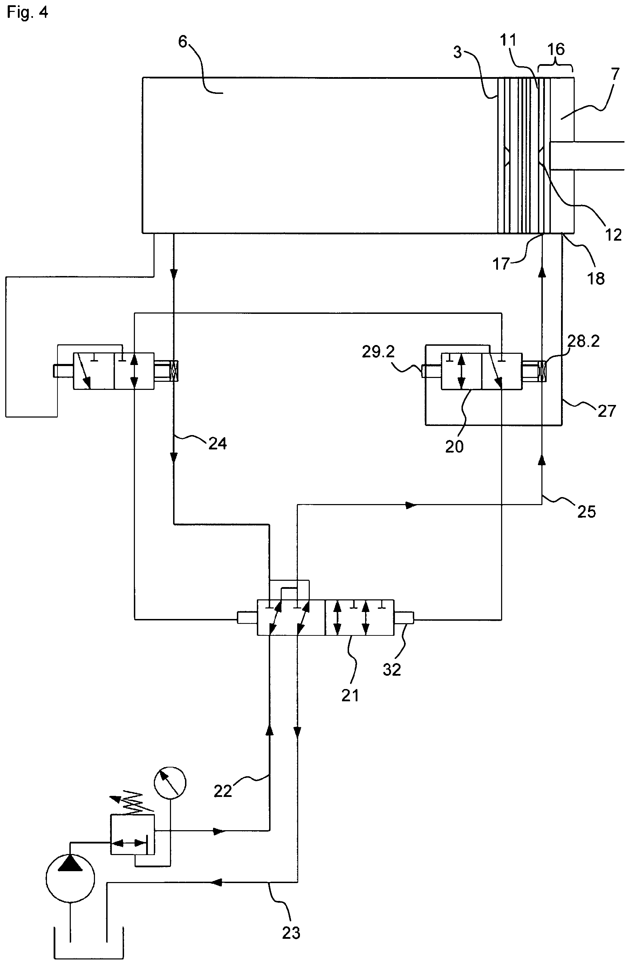

Fig. 4 zeigt den vierten Betriebszustand. Der Kolben 3 befindet sich in dem zweiten Endlagendämpfungsbereich 16, wobei der zweite Hauptanschluss 17 von dem zweiten Kolbenring 11 überfahren wurde, so dass ein Teilvolumen des Fluids in dem zweiten Arbeitsraum 7 eingeschlossen ist. Dieses ist über den zweiten Kolbenringspalt 12 gedrosselt abströmbar. Aus der Verdichtung des eingeschlossenen Fluids resultiert ein Überdruck an dem zweiten Steueranschluss 18, welcher mittels der zweiten Steuerleitung 27 an das zweite Steuerventil 20 übertragbar ist. Das zweite Steuerventil 20 wird nun infolge der erhöhten Druckbeaufschlagung an dem Betätigungsanschluss 29 in die aktive Schaltstellung versetzt, wobei das Federelement 28 zusammengestaucht wird. In der aktiven Schaltstellung ermöglicht das zweite Steuerventil 20 einen Fluiddurchtritt in Richtung des Umschaltventils 21, so dass der zweite Betätigungsanschluss 32 des Umschaltventils 21 mit einem Druck beaufschlagt wird und dieses in die zweite Schaltstellung übergeht. In der zweiten Schaltstellung ist ein Druckstrom mittels der Druckstromzuleitung 22 über das Umschaltventil 21 und die zweite Hauptleitung 25 in den zweiten Arbeitsraum 7 leitbar. Zugleich ist ein Fluidabstrom aus dem ersten Arbeitsraum 6 über die erste Hauptleitung 24 und das Umschaltventil 21 in die Fluidrückleitung 23 einleitbar. Aufgrunddessen erfolgt eine erneute Bewegungsumkehr der Kolbeneinheit unter Bereitstellung einer Endlagendämpfung.

### Verwendete Bezugszeichen

- 1: Arbeitszylinder
- 2: hydraulische Steuerungseinheit
- 3: Kolben
- 4: Kolbenstange
- 5: Zylinderrohr
- 6: erster Arbeitsraum
- 7: zweiter Arbeitsraum
- 8: Dichtung
- 9: erster Kolbenring
- 10: erster Kolbenringspalt
- 11: zweiter Kolbenring
- 12: zweiter Kolbenringspalt
- 13: erster Endlagendämpfungsbereich
- 14: erster Hauptanschluss
- 15: erster Steueranschluss
- 16: zweiter Endlagendämpfungsbereich
- 17: zweiter Hauptanschluss
- 18: zweiter Steueranschluss
- 19: erstes Steuerventil
- 20: zweites Steuerventil
- 21: Umschaltventil
- 22: Druckstromzuleitung
- 23: Fluidrückleitung
- 24: erste Hauptleitung
- 25: zweite Hauptleitung
- 26: erste Steuerleitung
- 27: zweite Steuerleitung
- 28.1: Federelement des ersten Steuerventils
- 28.2: Federelement des zweiten Steuerventils
- 29.1: Betätigungsanschluss des ersten Steuerventils
- 29.2: Betätigungsanschluss des zweiten Steuerventils
- 30.1: Gegenbetätigungsanschluss des ersten Steuerventils
- 30.2: Gegenbetätigungsanschluss des zweiten Steuerventils
- 31: erster Betätigungsanschluss
- 32: zweiter Betätigunganschluss
- 33: Druckstromquelle
- 34: erster Arbeitsanschluss
- 35: zweiter Arbeitsanschluss
- 36: dritter Arbeitsanschluss
- 37: vierter Arbeitsanschluss
- 38: fünfter Arbeitsanschluss
- 39: sechster Arbeitsanschluss
- 40: Tank

## Patentansprüche

1. Wechselschaltende Hydraulikeinheit,
aufweisend einen doppelt wirkenden Arbeitszylinder (1) und eine hydraulische Steuerungseinheit (2),
wobei der Arbeitszylinder einen Kolben (3), eine Kolbenstange (4) sowie ein Zylinderrohr (5) aufweist, wobei der Arbeitszylinder (1) einen ersten und einen zweiten Arbeitsraum (6; 7) aufweist,
wobei der Kolben (3) eine radial umlaufende Dichtung (8), einen ersten Kolbenring (9) mit einem ersten Kolbenringspalt (10) und einen zweiten Kolbenring (11) mit einem zweiten Kolbenringspalt (12) aufweist, wobei der erste und der zweite Kolbenring (9; 11) jeweils von der Dichtung (8) axial beabstandet angeordnet sind,
wobei der Arbeitszylinder (1) in einem ersten axialen Endlagendämpfungsbereich (13) einen ersten Hauptanschluss (14) sowie einen ersten Steueranschluss (15) und in einem zweiten axialen Endlagendämpfungsbereich (16) einen zweiten Hauptanschluss (17) sowie einen zweiten Steueranschluss (18) aufweist und wobei die Hauptanschlüsse (14; 17) jeweils gegenüber den Steueranschlüssen (15; 18) in Richtung des Kolbens (3) axial versetzt angeordnet sind und wobei
über die Hauptanschlüsse (14, 17) ein Fluid in die Arbeitsräume (6; 7) ein- und ausleitbar ist,
wobei in dem ersten Arbeitsraum (6) bei einem Überfahren des ersten Hauptanschlusses (14) von dem ersten Kolbenring (9) ein Teilvolumen des Fluids eingeschlossen ist, welches über den ersten Kolbenringspalt (10) gedrosselt abströmbar ist und wobei in dem zweiten Arbeitsraum (7) bei einem Überfahren des zweiten Hauptanschlusses (17) von dem zweiten Kolbenring (11) ein Teilvolumen des Fluids eingeschlossen ist, welches über den zweiten Kolbenringspalt (12) gedrosselt abströmbar ist,
wobei die hydraulische Steuerungseinheit (2) ein erstes und zweites hydraulisch betätigtes Steuerventil (19; 20), ein hydraulisch betätigtes Umschaltventil (21), eine Druckstromzuleitung (22), eine Fluidrückleitung (23), eine erste und zweite Hauptleitung (24; 25) sowie eine erste und zweite Steuerleitung (26; 27) aufweist,
wobei das erste und zweite Steuerventil (19; 20) jeweils eine passive und eine aktive Schaltstellung aufweisen, wobei das erste und zweite Steuerventil (19; 20) jeweils ein Federelement (28) aufweisen, das in der passiven Schaltstellung entspannt und in der aktiven Schaltstellung gespannt ist, wobei das erste und zweite Steuerventil (19; 20) jeweils einen Betätigungsanschluss (29) und einen Gegenbetätigungsanschluss (30) aufweisen, wobei bei einer gleichen Druckbeaufschlagung an dem Betätigungsanschluss (29) und an dem Gegenbetätigungsanschluss (30) die passive Schaltstellung eingenommen wird und wobei bei einer Druckbeaufschlagung mit einem höheren Druck an dem Betätigungsanschluss (29) die aktive Schaltstellung eingenommen wird,
wobei das Umschaltventil (21) eine erste und eine zweite Schaltstellung aufweist, wobei das Umschaltventil (21) einen ersten und einen zweiten Betätigungsanschluss (31; 32) aufweist und wobei bei einer Druckbeaufschlagung am ersten Betätigungsanschluss (31) die erste Schaltstellung und bei Druckbeaufschlagung am zweiten Betätigungsanschluss (32) die zweite Schaltstellung eingenommen wird,
wobei die Druckstromzuleitung (22) mit einem ersten Arbeitsanschluss (34) des Umschaltventils (21) verbunden ist und mit einer Druckstromquelle (33) verbindbar ist,
wobei die Fluidrückleitung (23) mit einem zweiten Arbeitsanschluss (35) des Umschaltventils (21) verbunden ist,
wobei die erste Hauptleitung (24) den ersten Hauptanschluss (14) des Arbeitszylinders (1) mit einem dritten und einem sechsten Arbeitsanschluss (36; 39) des Umschaltventils (21) und dem Gegenbetätigungsanschluss (30) des ersten Steuerventils (19) verbindet,
wobei die zweite Hauptleitung (25) den zweiten Hauptanschluss (17) des Arbeitszylinders (1) mit einem vierten und einem fünften Arbeitsanschluss (37; 38) des Umschaltventils (21) und dem Gegenbetätigungsanschluss (30) des zweiten Steuerventils (20) verbindet,
wobei die erste Steuerleitung (26) den ersten Steueranschluss (15) des Arbeitszylinders (1) mit dem Betätigungsanschluss (29) des ersten Steuerventils (19) und dem ersten Betätigungsanschluss (31) des Umschaltventils (21) verbindet und bei der aktiven Schaltstellung des ersten Steuerventils (19) geöffnet und bei der passiven Schaltstellung des ersten Steuerventils (19) geschlossen ist, wobei die zweite Steuerleitung (27) den zweiten Steueranschluss (18) des Arbeitszylinders (1) mit dem Betätigungsanschluss (29) des zweiten Steuerventils (20) und dem zweiten Betätigungsanschluss (32) des Umschaltventils (21) verbindet und bei der aktiven Schaltstellung des zweiten Steuerventils (20) geöffnet und bei der passiven Schaltstellung des zweiten Steuerventils (20) geschlossen ist,
wobei bei einem Überfahren des ersten Hauptanschlusses (14) von dem ersten Kolbenring (9) ein Überdruck an dem ersten Steueranschluss (15) mittels der ersten Steuerleitung (26) an das erste Steuerventil (19) übertragbar und dieses in einem aktiven Schaltungszustand versetzbar und über das erste Steuerventil (19) der erste Betätigungsanschluss (31) des Umschaltventils (21) mit einem Druck beaufschlagbar und von dem Umschaltventil (21) eine erste Schaltstellung einnehmbar und in der ersten Schaltstellung ein Druckstrom aus der Druckstromzuleitung (22) über das Umschaltventil (21) und die erste Hauptleitung (24) in den ersten Arbeitsraum (6) leitbar und ein Fluidabstrom aus dem zweiten Arbeitsraum (7) über die zweite Hauptleitung (25) und das Umschaltventil (21) in die Fluidrückleitung (23) einleitbar ist,
wobei bei einem Überfahren des zweiten Hauptanschlusses (17) von dem zweiten Kolbenring (11) ein Überdruck an dem zweiten Steueranschluss (18) mittels der zweiten Steuerleitung (27) an das zweite Steuerventil (20) übertragbar und dieses in einem aktiven Schaltungszustand versetzbar und über das zweite Steuerventil (20) der zweite Betätigungsanschluss (32) des Umschaltventils (21) mit einem Druck beaufschlagbar und von dem Umschaltventil (21) eine zweite Schaltstellung einnehmbar und in der zweiten Schaltstellung ein Druckstrom aus der Druckstromzuleitung (22) über das Umschaltventil (21) und die zweite
Hauptleitung (25) in den zweiten Arbeitsraum (7) leitbar und ein Fluidabstrom aus dem ersten Arbeitsraum (6) über die erste Hauptleitung (24) und das Umschaltventil (21) in die Fluidrückleitung (23) einleitbar ist.

## Claims

1. Change-over hydraulic unit,
comprising a double-acting working cylinder (1) and a hydraulic control unit (2), wherein the working cylinder (1) comprises a piston (3), a piston rod (4) and a cylinder tube (5), wherein the working cylinder (1) comprises a first and a second work space (6; 7),
wherein the piston (3) has a radially circumferential seal (8), a first piston ring (9) with a first piston ring gap (10) and a second piston ring (11) with a second piston ring gap (12), wherein both the first and the second piston ring (9; 11) are axially spaced from the seal (8),
wherein the working cylinder (1) has a first main connection (14) and a first control connection (15) in a first axial end position attenuation range (13) and a second main connection (17) and a second control connection (18) in a second axial end position attenuation range (16), and wherein each of the main connections (14; 17) is axially offset relative to the control connections (15; 18) in the direction of the piston (3), and wherein
a fluid can be led in and out of the work spaces (6; 7) via the main connections (14, 17),
wherein a partial volume of the fluid is enclosed in the first work space (6) when the first main connection (14) is passed over by the first piston ring (9), and said partial volume is dischargeable in a throttled manner via the first piston ring gap (10), and wherein a partial volume of the fluid is enclosed in the second work space (7) when the second main connection (17) is passed over by the second piston ring (11), and said partial volume is dischargeable in a throttled manner via the second piston ring gap (12),
wherein the hydraulic control unit (2) comprises a first and second hydraulically actuated control valve (19; 20), a hydraulically actuated switchover valve (21), a pressure flow supply line (22), a fluid return line (23), a first and a second main line (24; 25), and a first and a second control line (26; 27),
wherein each of the first and the second control valves (19; 20) has a passive and an active switching position, wherein each of the first and the second control valves (19; 20) has a spring element (28) which is relaxed in the passive switching position and tensioned in the active switching position, wherein each of the first and the second control valves (19; 20) has an actuation connector (29) and a counter-actuation connector (30), and wherein the passive switching position is assumed when the same pressure is applied to the actuation connector (29) and to the counter-actuation connector (30), and wherein the active switching position is assumed when a higher pressure is applied to the actuation connector (29),
wherein the switchover valve (21) has a first and a second switching position, wherein the switchover valve (21) has a first and a second actuation connector (31; 32), and wherein the first switching position is assumed when pressure is applied to the first actuation connector (31) and the second switching position is assumed when pressure is applied to the second actuation connector (32),
wherein the pressure flow supply line (22) is connected to a first work connection (34) of the switchover valve (21) and can be connected to a pressure flow source (33),
wherein the fluid return line (23) is connected to a second work connection (35) of the switchover valve (21),
wherein the first main line (24) connects the first main connection (14) of the working cylinder (1) to a third and a sixth work connection (36; 39) of the switchover valve (21) and to the counter-actuation connector (30) of the first control valve (19),
wherein the second main line (25) connects the second main connection (17) of the working cylinder (1) to a fourth and a fifth work connection (37; 38) of the switchover valve (21) and to the counter-actuation connector (30) of the second control valve (20),
wherein the first control line (26) connects the first control connector (15) of the working cylinder (1) to the actuation connector (29) of the first control valve (19) and the first actuation connector (31) of the switchover valve (21) and is open when the first control valve (19) is in the active switching position and is closed when the first control valve (19) is in the passive switching position,
wherein the second control line (27) connects the second control connection (18) of the working cylinder (1) to the actuation connector (29) of the second control valve (20) and to the second actuation connector (32) of the switchover valve (21) and is open when the second control valve (20) is in the active switching position and is closed when the second control valve (20) is in the passive switching position,
wherein, when the first main connection (14) is passed over by the first piston ring (9), an overpressure at the first control connector (15) can be transmitted via the first control line (26) to the first control valve (19) which can be set to an active switching state, and the first actuation connector (31) of the switchover valve (21) can be pressurized via the first control valve (19), and the switchover valve (21) can assume a first switching position, and, in the first switching position, a pressure flow can be led from the pressure flow supply line (22) into the first work space (6) via the switchover valve (21) and the first main line (24), and a fluid outflow can be routed from the second work space (7) into the fluid return line (23) via the second main line (25) and the switchover valve (21), wherein, when the second main connection (17) is passed over by the second piston ring (11), an overpressure at the second control connection (18) can be transmitted via the second control line (27) to the second control valve (20) which can be set to an active switching state, and the second actuation connector (32) of the switchover valve (21) can be pressurized via the second control valve (20), and the switchover valve (21) can assume a second switching position, and, in the second switching position, a pressure flow can be led from the pressure flow supply line (22) into the second work space (7) via the switchover valve (21) and the second main line (25), and a fluid outflow can be routed from the first work space (6) into the fluid return line (23) via the first main line (24) and the switchover valve (21).

## Revendications

1. Unité hydraulique à commutation,
présentant un vérin de travail (1) à double effet et une unité de commande hydraulique (2),
le vérin de travail présentant un piston (3), une tige à piston (4) ainsi qu'un tube cylindrique (5), le vérin de travail (1) présentant un premier et un deuxième espace de travail (6; 7),
dans lequel le piston (3) présente un joint périphérique radiale (8), un premier segment de piston (9) avec une première fente de segment de piston (10) et un second segment de piston (11) avec une seconde fente de segment de piston (12), dans lequel les premier et second segments de piston (9; 11) sont chacun disposés à distance axiale du joint (8),
dans lequel le vérin de travail (1) présente un premier raccord principal (14) et un premier raccord de commande (15) dans une première zone d'amortissement de fin de course axiale (13) et un deuxième raccord principal (17) et un deuxième raccord de commande (18) dans une deuxième zone d'amortissement de fin de course axiale (16), et dans lequel les raccords principaux (14; 17) sont respectivement disposés de manière décalée axialement par rapport aux raccords de commande (15; 18) en direction du piston (3), et dans lequel un fluide peut être introduit dans les espaces de travail (6; 7) et évacué de celles-ci par les raccords principaux (14, 17),
dans lequel un volume partiel du fluide est contenu dans le premier espace de travail (6) lorsque le premier segment de piston (9) passe sur le premier raccord principal (14), lequel volume partiel peut être évacué de manière étranglée par la première fente de segment de piston (10), et dans lequel un volume partiel du fluide est contenu dans le deuxième espace de travail (7) lorsque le deuxième segment de piston (11) passe sur le deuxième raccord principal (17), lequel volume partiel peut être évacué de manière étranglée par la deuxième fente de segment de piston (12),
dans lequel l'unité de commande hydraulique (2) comprend une première et une deuxième vanne de commande à actionnement hydraulique (19; 20), une vanne d'inversion à actionnement hydraulique (21), une ligne d'alimentation en pression (22), une ligne de retour de fluide (23), une première et une deuxième ligne principale (24; 25) et une première et une deuxième ligne de commande (26; 27),
dans lequel la première et la deuxième vanne de commande (19; 20) présente chacune une position de commutation passive et une position de commutation active, dans lequel la première et la deuxième vanne de commande (19; 20) présente chacune un élément à ressort (28) qui est détendu dans la position de commutation passive et tendu dans la position de commutation active, dans lequel la première et la deuxième vanne de commande (19; 20) présente chacune un raccord d'actionnement (29) et un raccord d'actionnement à contre-courant (30), dans lequel la position de commutation passive étant prise lorsque la même pression est appliquée au raccord d'actionnement (29) et au raccord d'actionnement à contre-courant (30), et la position de commutation active étant prise lorsqu'une pression plus élevée est appliquée au raccord d'actionnement (29),
dans lequel la vanne d'inversion (21) a une première et une seconde position de commutation, dans lequel la vanne d'inversion (21) a un premier et un second raccord d'actionnement (31; 32) et dans lequel la première position de commutation est prise lorsque la pression est appliquée au premier raccord d'actionnement (31) et la seconde position de commutation est prise lorsque la pression est appliquée au second raccord d'actionnement (32),
dans lequel la conduite d'alimentation en pression (22) est reliée à un premier raccord de travail (34) de la vanne d'inversion (21) et peut être reliée à une source de débit sous pression (33),
dans lequel la ligne de retour du fluide (23) est connectée à un second raccord de travail (35) de la vanne d'inversion (21),
la première ligne principale (24) reliant le premier raccord principal (14) du vérin de travail (1) à un troisième et un sixième raccord de travail (36; 39) de la vanne d'inversion (21) et au raccord d'actionnement à contre-courant (30) de la première vanne de commande (19),
la deuxième ligne principale (25) reliant le deuxième raccord principal (17) du vérin de travail (1) à un quatrième et un cinquième raccord de travail (37; 38) de la vanne d'inversion (21) et au raccord d'actionnement à contre-courant (30) de la deuxième vanne de commande (20),
dans lequel la première ligne de commande (26) relie le premier raccord de commande (15) du vérin de travail (1) au raccord d'actionnement (29) de la première vanne de commande (19) et au premier raccord d'actionnement (31) de la vanne d'inversion (21) et est ouverte lorsque la première vanne de commande (19) est dans la position de commutation active et est fermée lorsque la première vanne de commande (19) est dans la position de commutation passive,
dans lequel la deuxième ligne de commande (27) relie le deuxième raccord de commande (18) du vérin de travail (1) au raccord d'actionnement (29) de la deuxième vanne de commande (20) et au deuxième raccord d'actionnement (32) de la vanne d'inversion (21) et est ouverte lorsque la deuxième vanne de commande (20) est dans la position de commutation active et est fermée lorsque la deuxième vanne de commande (20) est dans la position de commutation passive,
dans lequel, lorsque le premier segment de piston (9) passe sur le premier raccord principal (14), une surpression au niveau du premier raccord de commande (15) peut être transmise au moyen de la première ligne de commande (26) à la première vanne de commande (19) et celle-ci peut être placée dans un état de commutation actif, et le premier raccord d'actionnement (31) de la vanne d'inversion (21) peut être alimenté en pression par l'intermédiaire de la première vanne de commande (19) et une première position de commutation peut être prise par la vanne de commutation (21) et, dans la première position de commutation, un courant sous pression peut être conduit de la conduite d'alimentation en pression (22) par la vanne de commutation (21) et la première ligne principale (24) dans le premier espace de travail (6) et un écoulement de fluide peut être introduit du second espace de travail (7) par la seconde ligne principale (25) et la vanne de commutation (21) dans la ligne de retour du fluide (23),
dans lequel, lorsque le deuxième segment de piston (11) passe sur le deuxième raccord principal (17), une surpression au niveau du deuxième raccord de commande (18) peut être transmise au moyen de la deuxième ligne de commande (27) à la deuxième vanne de commande (20) et celle-ci peut être placée dans un état de commutation actif, et le deuxième raccord d'actionnement (32) de la vanne d'inversion (21) peut être alimenté en pression par l'intermédiaire de la deuxième vanne de commande (20) et une deuxième position de commutation peut être prise par la vanne de commutation (21) et, dans la deuxième position de commutation, un courant sous pression peut être conduit de la conduite d'alimentation en pression (22) par la vanne de commutation (21) et la deuxième ligne principale (25) dans le deuxième espace de travail (7) et un écoulement de fluide peut être introduit du premier espace de travail (6) par la premier ligne principale (24) et la vanne de commutation (21) dans la ligne de retour du fluide (23).
